# DEMANDE DE BREVET EUROPEEN

(11) **EP 3 863 132 A1**
(43) Date de publication de la demande: **11.08.2021**
(21) Numéro de dépôt: 20305105.7
(22) Date de dépôt: 05.02.2020
(51) Int. Cl.: H02B 1/16, H02G 5/02, H01B 17/18, H01B 17/16

(54) **ISOLATEUR POUR BARRE D'ÉQUIPOTENTIALITÉ**

(71) Demandeur: Maltep, 68420 Herrlisheim Pres Colmar (FR)
(72) Inventeur: LAVIEUVILLE, Matthieu, 68770 Ammerschwihr (FR); CHAFIOL, Christian, 68650 Le Bonhomme (FR)
(74) Mandataire: Regimbeau

(57) **Abrégé**

L'invention concerne un isolateur pour barre d'équipotentialité comportant un plot en un matériau diélectrique et au moins une patte de fixation, caractérisé en ce que la ou les pattes de fixation (6a, 6b) sont venues de matière avec le plot (5) et définissent avec une base du plot une surface d'appui dans un même plan, le plot (5) intégrant, à son extrémité opposé à sa base, un insert (7) adapté au vissage de la barre d'équipotentialité (BE), la surface d'appui étant adaptée pour être en contact direct avec le plan support sur lequel ledit isolateur (I1, I2) et la barre d'équipotentialité (BE) sont destinés à être montés.

## Description

### Domaine technique général et art antérieur

La présente invention est relative à un isolateur pour barre d'équipotentialité (BE) et plaque de terre (PDT).

On rappelle qu'une barre d'équipotentialité (ou plaque de terre) est une plaque métallique conductrice, permettant le raccordement des liaisons équipotentielles au réseau de terre d'une installation électrique.

Une telle plaque est en métal (cuivre, Aluminium, acier Inox, ...) pour l'obtention de contacts optimaux. Elle est percée de plusieurs trous destinés à recevoir la visserie qui maintiendra les câbles qui y seront connectés.

Les barres d'équipotentialité montées sur isolateur sont généralement fixées sur un mur en béton ou sur un châssis métallique.

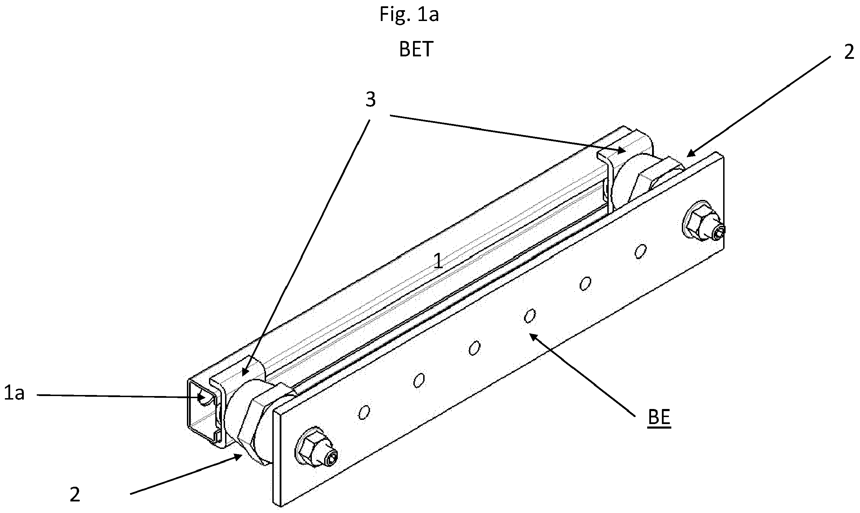

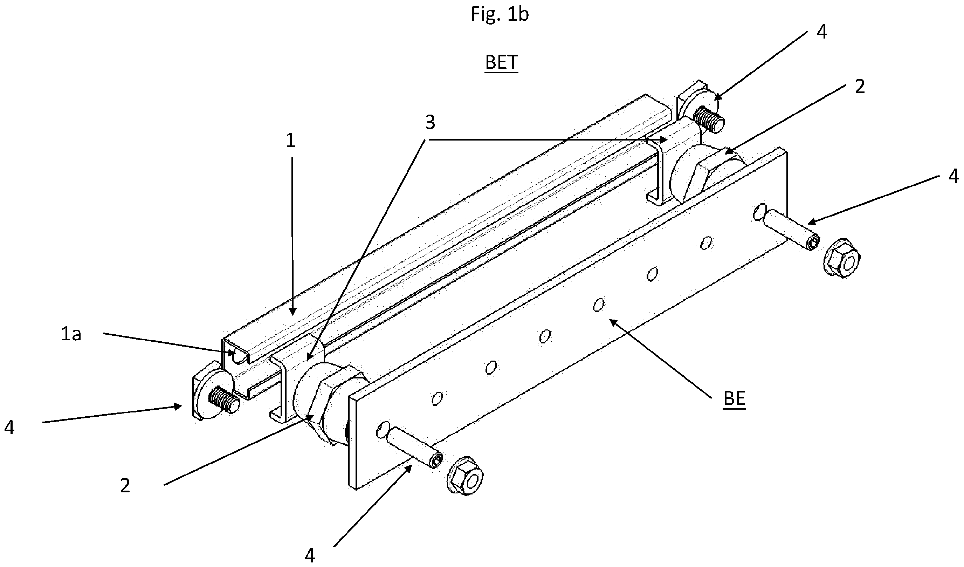

Un montage classique d'un tel ensemble BET est représenté sur les figures 1a et 1b.

Dans ce montage, un rail de fixation 1 en inox ou acier galvanisé à chaud est destiné à être boulonné sur le mur ou sur le châssis support. Il présente à cet effet différentes tailles de trous oblongs ou cylindriques 1a répartis sur toute sa longueur.

Des isolateurs 2 sont interposés entre la barre d'équipotentialité BE et le rail 1.

Des étriers 3 rapportés sur ce rail 1 permettent d'ajuster la position des isolateurs 2 et de la barre d'équipotentialité BE.

Comme on le comprend plus particulièrement sur la figure 1b sur laquelle les différents éléments de visserie 4 ont été détaillés, le nombre de pièces intervenant dans ce montage est particulièrement important (plus de quatorze)

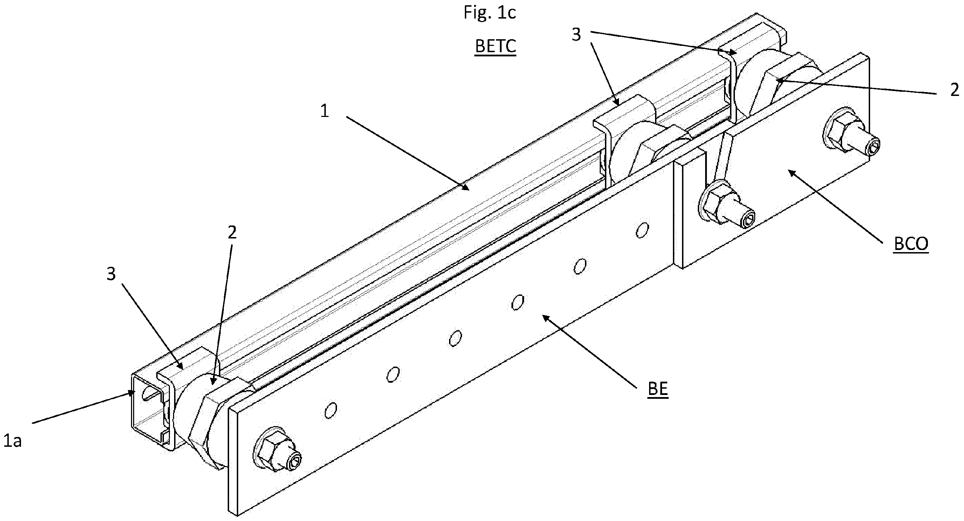

La figure 1c illustre quant à elle le cas d'un ensemble BETC composé d'une barre d'équipotentialité BE avec barrette de coupure BCO, pour la déconnexion du circuit et la mesure de la résistance de terre.

La mise en place de la barrette de coupure BCO nécessite un jeu d'isolateur 2 et d'étrier 3 supplémentaires.

On connait par ailleurs des structures de fixation de barres d'équipotentialité, avec lesquelles les isolateurs sont montés sur le support mur ou châssis par l'intermédiaire de rails ou des pattes en acier de section en Oméga.

Ces montages restent complexes et avec un nombre de pièces importants.

Par ailleurs, comme les montages illustrés sur les figures 1a à 1c, ils présentent un encombrement en hauteur important.

### Présentation générale de l'invention.

Avec les systèmes connus à ce jour, le nombre de composants intervenant dans la fixation des barres d'équipotentialité est important.

La fixation est complexe pour le client, puisque celui-ci doit notamment démonter la barre en cuivre au moment de l'installation.

Un but de l'invention est de proposer une solution permettant de limiter le nombre de composants et de simplifier les opérations intervenant dans la fixation d'une barre d'équipotentialité.

A cet effet, l'invention propose un isolateur pour barre d'équipotentialité comportant un plot en un matériau diélectrique et au moins une patte de fixation, caractérisé en ce que la ou les pattes de fixation sont venues de matière avec le plot et définissent avec une base du plot une surface d'appui dans un même plan, le plot intégrant, à son extrémité opposé à sa base, un insert adapté au vissage de la barre d'équipotentialité, la surface d'appui étant adaptée pour être en contact direct avec le plan support sur lequel l'isolateur et la barre d'équipotentialité sont destinés à être montés.

Avec ce nouvel isolateur, le nombre de composants est réduit.

Le poids est réduit (élimination du rail et de ses éléments de fixation)
Le temps ainsi que les erreurs potentielles de montage sont fortement diminués.

La hauteur de l'ensemble est également réduite
La rigidité de l'ensemble est augmentée
De plus, l'isolateur ne comporte plus qu'un insert métallique fileté, ce qui représente un gain économique potentiel à taille de lot identique et un accroissement de la tenue diélectrique.

L'invention concerne en outre un ensemble comportant une barre d'équipotentialité et au moins deux isolateurs du type précité.

### Brève description des dessins

D'autres caractéristiques et avantages de l'invention ressortiront encore de la description qui suit, laquelle est purement illustrative et non limitative, et doit être lue en regard des figures annexées sur lesquelles :
- les figures 1a à 1c illustrent un exemple de montage d'un ensemble BET et BETC connu dans l'état de la technique (sans et avec barrette de coupure) ;
- les figures 2a et 2b illustrent un exemple d'isolateur conforme à un mode de réalisation possible de l'invention, la figure 2c illustrant le montage d'un ensemble barre d'équipotentialité BEQ avec des isolateurs du type de celui des figures 2a et 2b ;
- les figures 3a à 3c illustrent un exemple d'isolateur conforme à un autre mode de réalisation possible de l'invention, la figure 3d illustrant le montage d'un ensemble barre d'équipotentialité avec barrette de coupure BEQC, avec un isolateur du type de celui des figures 3a à 3c ;
- les figures 4a et 4b à 10a et 10b illustrent différents autres exemples de mode de réalisation possible pour l'invention.

### Description d'un ou plusieurs modes de mise en œuvre et de réalisation

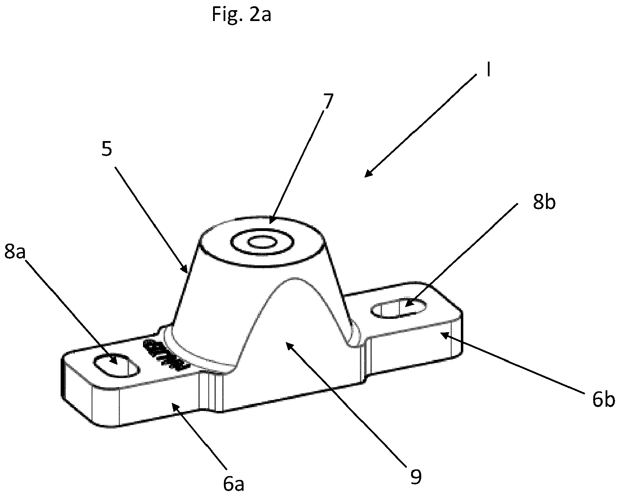

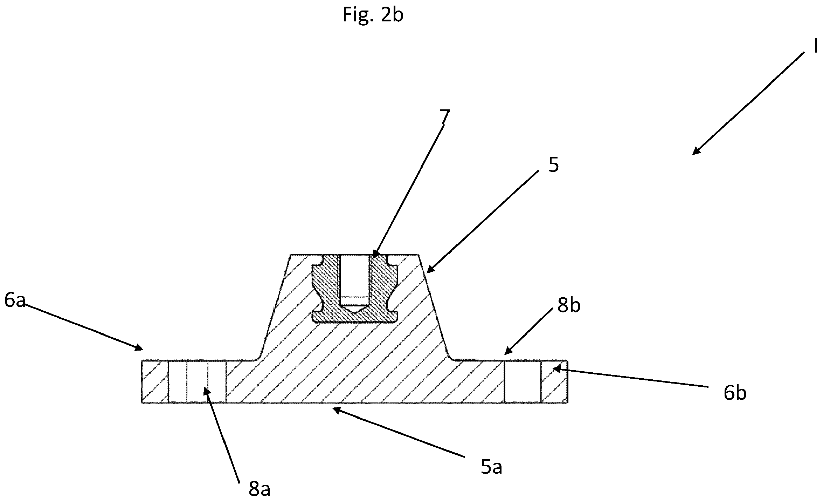

L'isolateur I représenté sur les figures 2a et 2b est une pièce qui se présente sous la forme d'un plot support 5 et de deux pattes de fixation 6a et 6b.

Les deux pattes de fixation 6a et 6b sont venues de matière avec le plot 5.

Elles sont diamétralement opposées.

Elles sont dans le prolongement de la base 5a du plot 5 et définissent avec celui-ci une surface d'appui dans un même plan.

A son extrémité opposée, le plot 5 intègre un insert métallique 7 destiné à permettre le vissage d'une barre d'équipotentialité BE ou d'une barrette de coupure BCO.

Plus précisément, le plot 5 est surmoulé sur cet insert 7.

Ledit plot 5 et les pattes de fixation 6a et 6b qui forment une pièce avec celui-ci sont en matériau isolant tel qu'un polyester renforcé de fibres de verre.

L'insert 7 est par exemple quant à lui en acier zingué ou inoxydable.

Dans l'exemple illustré sur ces figures 2a et 2b, les deux pattes 6a et 6b sont diamétralement opposées.

Elles sont chacune percée d'un trou oblong (respectivement 8a, 8b) ou cylindrique, pour la fixation directe de l'isolateur sur le support plan (châssis ou mur par exemple).

Les directions principales des deux trous oblongs 8a et 8b sont perpendiculaires, afin de permettre un réglage du positionnement de l'isolateur et une mise à niveau de la barre d'équipotentialité.

Le plot 5 est de forme générale tronconique.

Il présente latéralement des pans coupés 9, qui permettent un gain de matière).

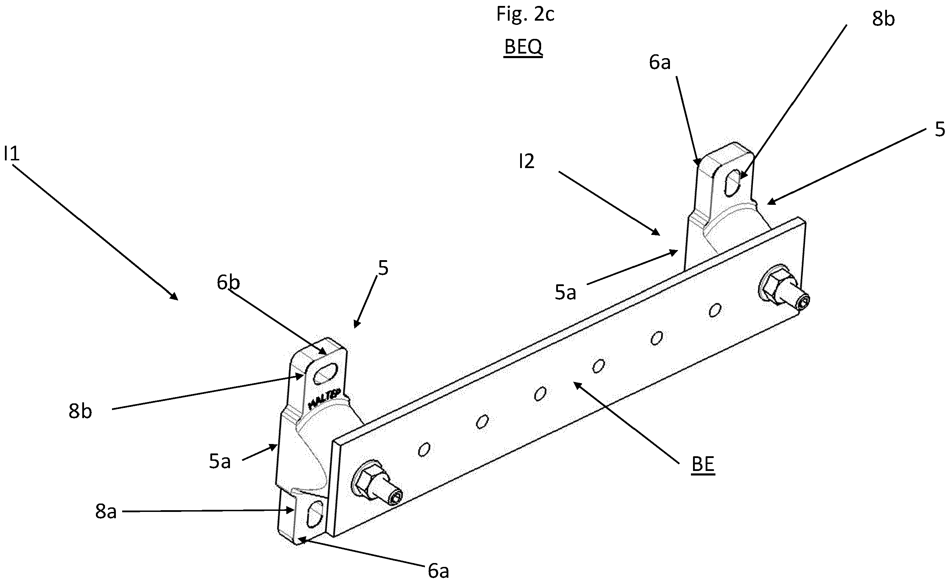

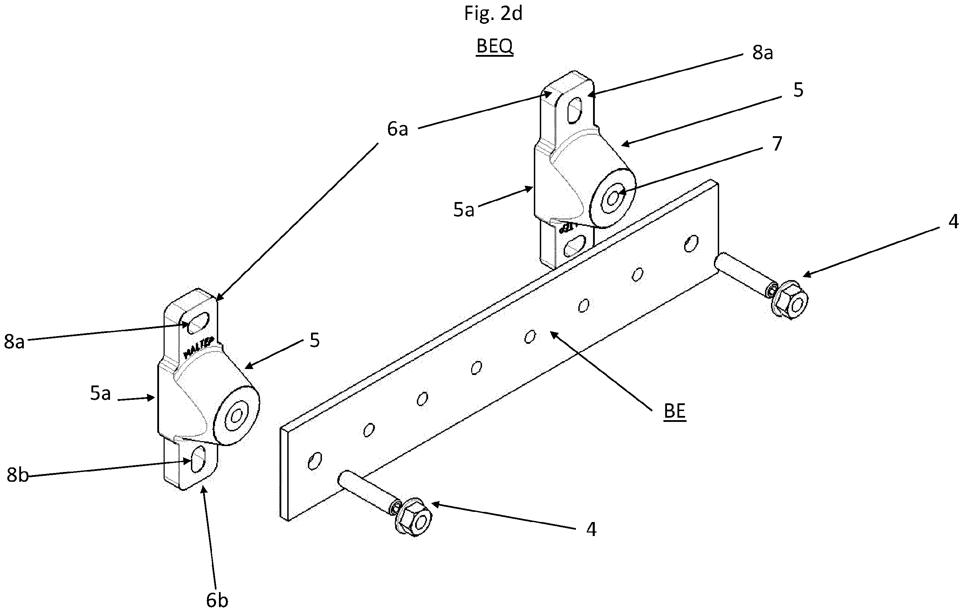

Le montage d'une barre d'équipotentialité BE au moyen de deux isolateurs I1 et I2 est illustré sur les figures 2c et 2d.

Ces deux isolateurs I1 et I2 sont mis en place sur un mur ou un châssis en étant orientés parallèlement l'un à l'autre (pattes de fixation 6a, 6b parallèles).

La surface d'appui du fond 5a du plot 5 et des pattes de fixation 6a et 6b est alors en contact direct avec le support que constitue ledit mur ou châssis.

Ces deux isolateurs I1 et I2 sont ensuite fixés sur ledit support grâce aux trous oblongs 8a, 8b des pattes de fixation 6a, 6b.

La barre d'équipotentialité BE est préalablement boulonnée sur les inserts 7 de ces isolateurs I1 et I2 (visserie 4).

On comprend aisément qu'un même type d'isolateurs I est adapté pour différentes dimensions des barres d'équipotentialité.

Le temps de montage est particulièrement réduit.

Le nombre de composants intervenant dans la fixation de la barre d'équipotentialité est en l'occurrence inférieur à neuf.

De plus, l'isolateur ne comportant plus qu'un insert métallique fileté, l'ensemble présente une meilleure résistance sous tension.

Différents modes de réalisation sont bien entendu envisageables.

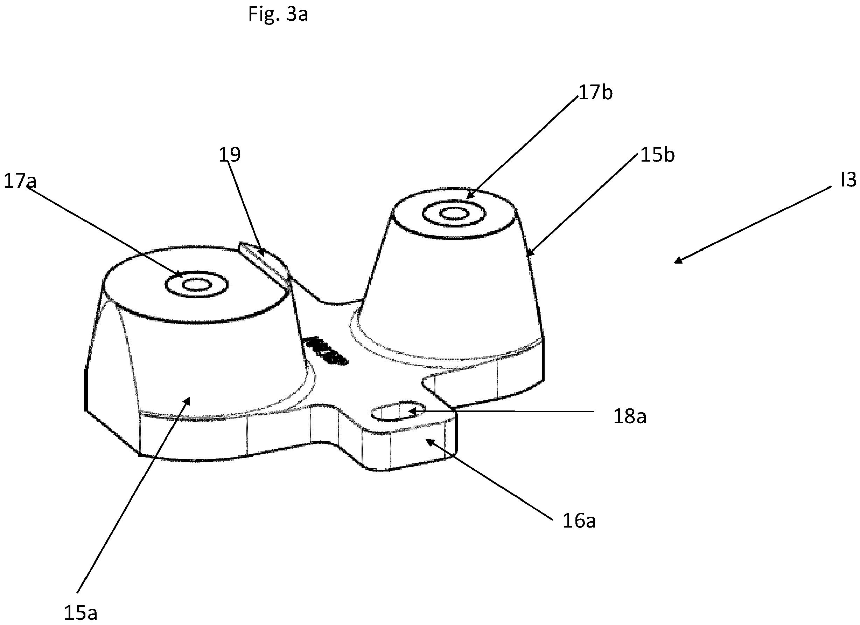

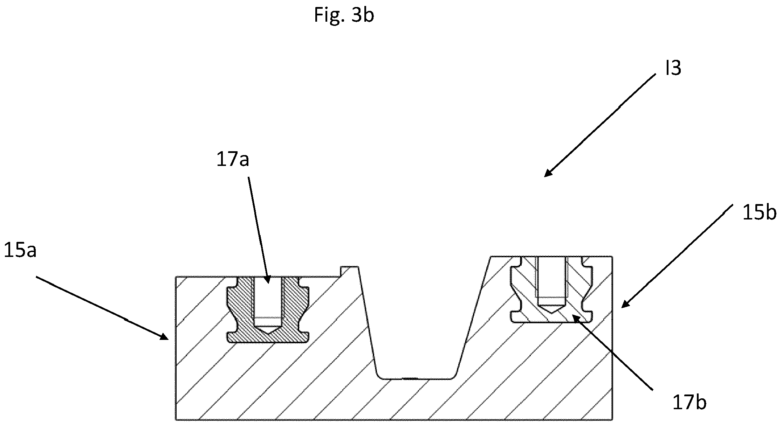

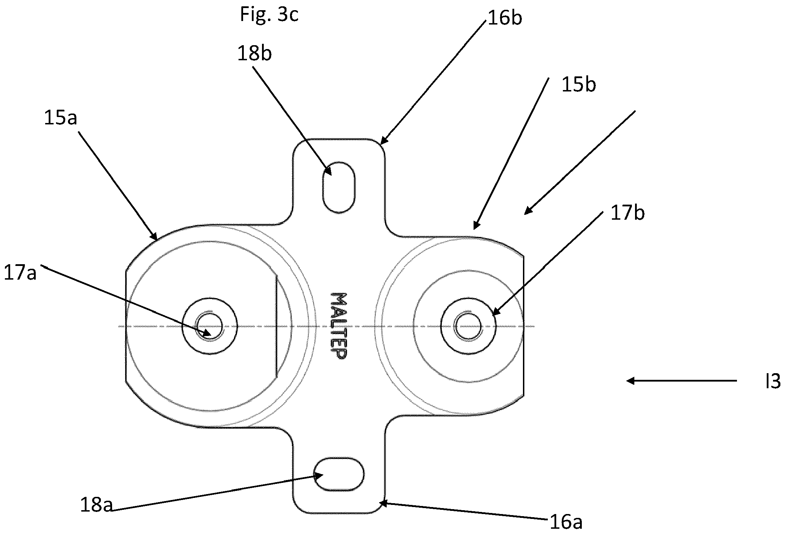

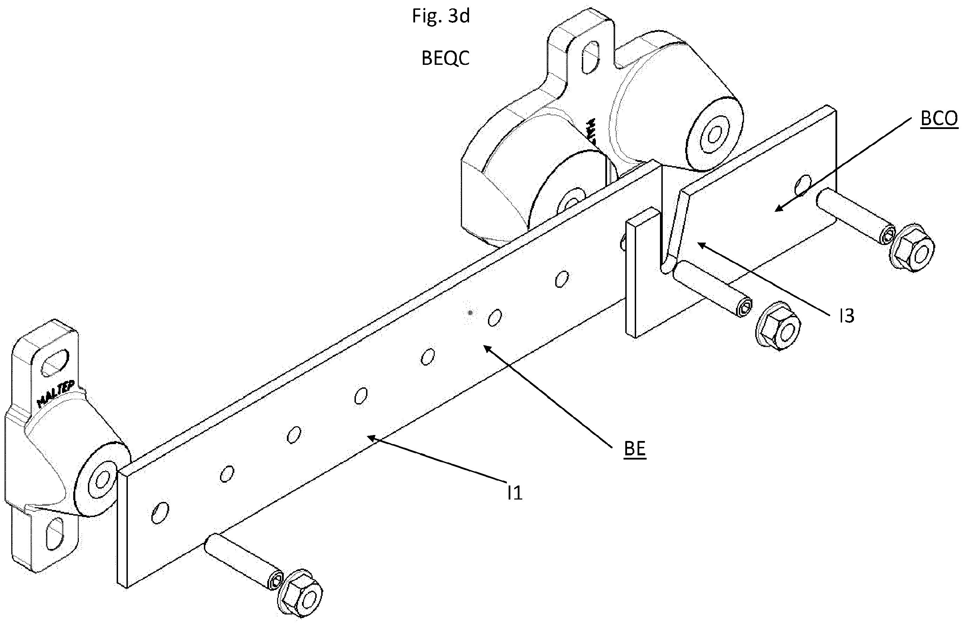

Dans le cas illustré sur les figures 3a à 3c, l'isolateur I3 comporte deux plots 15a et 15b de façon à assurer la fixation d'une part d'une barre d'équipotentialité BE et d'autre part d'une barrette de coupure BCO.

Deux pattes 16a et 16b munies de trous de fixation 18a, 18b sont venues de matière avec ces plots 15a et 15b.

Ces pattes 16, 16b et les bases des plots 15a, 15b sont dans un même plan et définissent pour l'isolateur I3 une surface d'appui destinée à être en contact direct avec le support (mur ou châssis) sur lequel la barre d'équipotentialité et la barrette de coupure sont destinées à être montées.

Des inserts de vissage 17 et 17b sont intégrés à chacun des deux plots 15, 15b.

Les deux plots 15a, 15b sont en l'occurrence de forme tronconique ; les deux pattes 16a, 16b s'étendent dans le prolongement l'une de l'autre, de part et d'autre d'une zone intermédiaire entre les deux plots 15a et 15b.

Un rebord anti-rotation 19 peut être prévu sur l'un des plots (en l'occurrence celui 15a destiné à recevoir l'une des extrémités de la barre d'équipotentialité BE). Ce rebord 19 est destiné à bloquer le bord de la barre BE et à empêcher la rotation de l'ensemble.

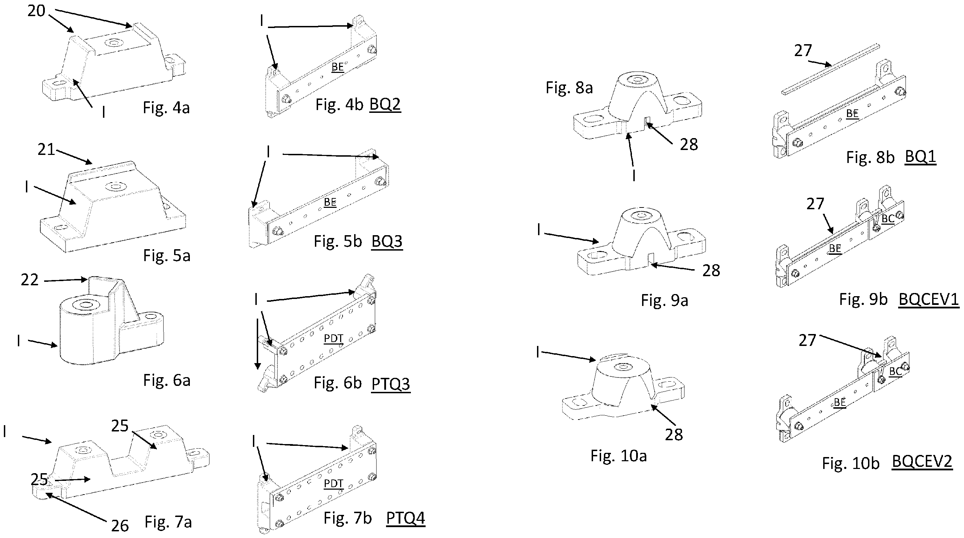

Différentes autres configurations sont encore illustrées sur les figures 4a, 4b à 10a, 10b.

Dans le cas des figures 4a et 4b, les plots des isolateurs I sont de forme trapézoïdale.

Ils présentent deux rebords anti-rotation 20 qui, au niveau d'un tel plot, viennent encadrer la barre d'équipotentialité BE de chaque côté de sa longueur.

Dans l'exemple des figures 5a et 5b, un plot d'un isolateur I, également trapézoïdal, ne comporte qu'un rebord d'anti-rotation 21 adapté pour bloquer une barre d'équipotentialité à une de ses extrémités dans sa longueur. La barre d'équipotentialité BE est bloquée, à chacune de ses extrémités dans sa longueur, contre le rebord d'anti-rotation 21 du plot qui la supporte à cette extrémité.

Dans le cas des figures 6a et 6b, un isolateur I comporte un dispositif anti-rotation 22 en coin adapté pour bloquer un coin à une extrémité de la plaque de terre PDT. La plaque de terre PDT est alors montée sur quatre isolateurs I (un à chaque coin). Chaque isolateur I comporte une seule patte de fixation 23, qui est d'une pièce avec le plot. Un renfort 24 rigidifie ladite patte. Le trou de fixation 25 de ladite patte est en l'occurrence circulaire ou oblong. Un tel dispositif est particulièrement intéressant dans le cas d'une plaque de terre à deux rangées de trous.

Dans l'exemple de la figure 7a et 7b, la plaque de terre PDT est également une barre à deux rangées de trous. L'isolateur I comporte deux plots trapézoïdaux 25, chacun doté d'un insert. Les isolateurs I sont fixés à chacune des extrémités dans la longueur de la barre. Plus précisément, chaque isolateur I est fixé par l'un et l'autre de ses deux inserts à l'une et l'autre des deux rangées de la barre PDT. Les pattes de fixation 26 d'un isolateur I s'étendent de part et d'autre des deux plots dudit isolateur.

Dans l'exemple des figures 8a et 8b, une barrette 27 centrale s'étend entre les bases des plots des différents isolateurs I et assurent l'anti-rotation. Un plot présente à cet effet une fente 28 destinée à recevoir la barrette d'antirotation.

Les figures 9a et 9b illustrent le cas d'un montage avec barrette de coupure BCO. La barrette 27 centrale s'étend entre les bases des trois isolateurs I et assurent l'anti-rotation.

Dans l'exemple des figures 10a et 10b, la barrette 27 anti-rotation ne s'étend qu'entre la barre d'équipotentialité BE et la barrette de coupure BCO.

## Revendications

1. Isolateur pour barre d'équipotentialité comportant un plot en un matériau diélectrique et au moins une patte de fixation, **caractérisé en ce que** la ou les pattes de fixation (6a, 6b ; 16a, 16b) sont venues de matière avec le plot (5 ; 15a, 15b) et définissent avec une base (5a) du plot une surface d'appui dans un même plan, le plot (5 ; 15a, 15b) intégrant, à son extrémité opposé à sa base, un insert (7 ; 17a, 17b) adapté au vissage de la barre d'équipotentialité (BE), la surface d'appui étant adaptée pour être en contact direct avec le plan support sur lequel ledit isolateur (I, I1, I2, I3) et la barre d'équipotentialité (BE) sont destinés à être montés.

2. Isolateur selon la revendication 1, **caractérisé en ce qu'**il comporte deux pattes de fixation (6a, 6b ; 16a, 16b) diamétralement opposées.

3. Isolateur selon la revendication 2, **caractérisé en ce que** chaque patte de fixation (6a, 6b ; 16a, 16b) est percée d'un trou oblong (8a, 8b ; 18a, 18b), ou cylindrique, pour la fixation directe de l'isolateur sur le plan support.

4. Isolateur selon la revendication 3, **caractérisé en ce que** les trous oblongs (8a, 8b ; 18a, 18b) des pattes de fixation (6a, 6b ; 16a, 16b) s'étendent selon des directions perpendiculaires.

5. Isolateur selon l'une des revendications précédentes, **caractérisé en ce qu'**un plot présente au moins un rebord d'anti-rotation (19, 20, 21, 22).

6. Isolateur selon la revendication 5, **caractérisé en ce qu'**un plot comporte deux rebords d'anti-rotation (20) adaptés pour encadrer une barre d'équipotentialité de chaque côté de sa longueur.

7. Isolateur selon la revendication 5, **caractérisé en ce qu'**un plot comporte un rebord d'anti-rotation (19, 21) adapté pour bloquer une barre d'équipotentialité à une de ses extrémités dans sa longueur.

8. Isolateur selon la revendication 5, **caractérisé en ce qu'**un plot comporte un rebord d'anti-rotation en coin (22), adaptés pour bloquer un coin à une extrémité de la plaque de terre.

9. Isolateur selon l'une des revendications 1 à 4, **caractérisé en ce qu'**un plot présente une fente (28) destinée à recevoir une barrette d'anti-rotation (27).

10. Isolateur selon l'une des revendications précédentes, **caractérisé en ce qu'**il comporte deux plots (I3) et au moins une patte de fixation venus de matière.

11. Ensemble comportant une barre d'équipotentialité (BE) et au moins deux isolateurs (I, I1, I2, I3) selon l'une des revendications précédentes.

12. Ensemble selon la revendication 11, **caractérisé en ce qu'**il comporte en outre une barrette de coupure (BCO).
